# EUROPEAN PATENT APPLICATION

(11) **EP 1 903 229 A2**
(43) Date of publication of application: **26.03.2008**
(21) Application number: 07018214.2
(22) Date of filing: 17.09.2007
(51) Int. Cl.: F16C 33/12, F16C 33/14, F16C 33/04

(54) **Low-friction sliding mechanism and uses thereof**

(30) Priority: 21.09.2006 JP 2006255364
(71) Applicant: Nissan Motor Co., Ltd., Kanagawa 221-0023 (JP)
(72) Inventor: Nanbu, Toshikazu, Atsugi-shi, Kanagawa 243-0192 (JP); Yasuda, Yoshiteru, Atsugi-shi, Kanagawa 243-0192 (JP); Ueno, Takafumi, Atsugi-shi, Kanagawa 243-0192 (JP); Sakane, Tokio, Atsugi-shi, Kanagawa 243-0192 (JP); Takekawa, Toshihiro, Atsugi-shi, Kanagawa 243-0192 (JP)
(74) Representative: Schaeberle, Steffen

(57) **Abstract**

A low-friction sliding mechanism includes a pair of sliding members having respective sliding surfaces slidable relative to each other and an ionic liquid applied to the respective sliding surfaces. At least one of the sliding surfaces has a coating of either a diamond-like carbon material, a diamond material or a combination thereof. The ionic liquid consists of cation and anion components and exists in liquid or gel form at room temperature.

## Description

### BACKGROUND OF THE INVENTION

The present invention relates to a low-friction sliding mechanism and uses thereof.

In recent years, much attention has been given to "ionic liquids". The ionic liquids refer to organic salts consisting of cations and anions and existing in liquid form at room temperature and are also called "room-temperature molten salts", "ion liquids", "ion fluids", "ionic oils" etc. It is known that the ionic liquids exhibit different properties from those of ordinary organic solvents. For example, although the ordinary organic solvents show volatility and flammability due to their vapor pressures, the ionic liquids have very low negligible vapor pressures and show nonvolatility and thermal stability. In addition, the ionic liquids are chemically and electrochemically stable.

### SUMMARY OF THE INVENTION

There are attempts to apply the ionic liquids as lubricants to sliding members and thereby benefit from the excellent properties of the ionic liquids as reported in Non-Patent Document 1. In particular, Non-Patent Document 1 suggests that the ionic liquids have the potential for, when the viscosities of the ionic liquids are lowered for use as the lubricants, minimizing viscosity losses and securing high heat resistance and long-term stable properties. [Non-Patent Document 1] Functional Materials, "Application of Ionic Liquids to Tribology", Hideto Kamimura, Ichiro Minami and Masayuki Mori, No. 11, vol. 24 (2004), 63"

However, no researches have been made on the material combinations of the ionic liquids and the sliding members.

It is therefore an object of the present invention to provide a low-friction sliding mechanism in which an ionic liquid and sliding members are used in a suitable material combination.

As a result of extensive research, it has been found that the combined use of an ionic liquid and a diamond-like carbon and/or diamond material produces a significant friction reducing effect so as to attain a very low friction coefficient. The present invention is based on this finding.

According to a first aspect of the present invention, there is provided a low-friction sliding mechanism, comprising: a pair of sliding members having respective sliding surfaces slidable relative to each other, at least one of the sliding surfaces having a coating of either a diamond-like carbon material, a diamond-material or a combination thereof; and an ionic liquid applied to the respective sliding surfaces, the ionic liquid consisting of cation and anion components and existing in liquid or gel form at room temperature.

According to a second aspect of the present invention, there is provided an automotive internal combustion engine utilizing the above low-ftiction sliding mechanism.

According to a third aspect of the present invention, there is provided an automotive transmission utilizing the above low-friction sliding mechanism.

The other objects and features of the present invention will also become understood from the following description.

### BRIEF DESCRIPTIONS OF THE DRAWINGS

FIG. 1 is a schematic view of a friction test unit.

FIG 2 is a graph showing friction test results according to the present invention and according to the earlier technology.

### DESCRIPTIONS OF THE EMBODIMENTS

The present invention will be described below in detail. In the following description, all percentages (%) are by mass unless otherwise specified.

A low-friction sliding mechanism according to one exemplary embodiment of the present invention includes a pair of sliding members having sliding surfaces slidable relative to each other and a lubricant applied to the respective sliding surfaces, characterized in that: at least one of the sliding surfaces has a thin coating of either a diamond-like carbon (DLC) material, a diamond material or a combination thereof; and the lubricant is either an ionic liquid consisting of cation and anion components and existing in liquid or gel form at room temperature or an ionic conductive composition thereof.

Preferably, the DLC material and the diamond material have a sp3/sp2 carbon ratio of 2 or greater. If the sp3/sp2 carbon ratio is smaller than 2, the DLC material and the diamond material are too low in hardness to obtain a sufficient friction reducing effect. When the sp3/sp2 carbon ratio is 2 or greater, the DLC material and the diamond material are able to secure sufficient hardness, promote adsorption of the cation, anion or additive component onto the coating and thereby cause considerable decrease in friction coefficient.

The DLC material preferably has a hydrogen content of 3 atomic% or lower, more preferably 1 atomic% or lower, still more preferably 0.5 atomic% or lower. If the hydrogen content exceeds 3 atomic%, it is likely that the DLC material cannot ensure adequate adsorption of the cation, anion or additive component onto the coating and thus fails to obtain a sufficient friction reducing effect. The DLC material is able to promote adsorption of the cation, anion or additive component onto the coating for considerable decrease in friction coefficient as the hydrogen content of the DLC material decreases.

Herein, there are two DLC coating processes: one is physical vapor deposition (PVD) such as arc ion plating and the other is chemical vapor deposition (CVD). In the CVD process, CH gas e.g. methane is used as starting material so that the resulting DLC coating generally contains about 10 atomic% of hydrogen.
In the PVD process, by contrast, graphite is used as starting material so that the resulting DLC coating contains almost no hydrogen. For this reason, the DLC coating is likely to contribute to a lower friction coefficient when formed by the PVD process than when formed by the CVD process.

The diamond material preferably has a nanocrystalline structure with a crystal grain size of 20 nm or smaller, more preferably 10 nm or smaller, still more preferably 1 nm or smaller. As compared to the DLC coating formed by the PVD process, the diamond coating is higher in hardness and can produce a greater friction reducing effect. However, ordinary diamond has a large crystal grain size of several micrometers and tends to attack its opposing material during sliding due to such large crystal grains. If the crystal grain size exceeds 20 nm, the opposing material attack property of the diamond material is so strong that abrasive wear is likely to occur. When the crystal grain size is 20 nm or smaller, the diamond material is able to limit its opposing material attack property for prevention of abrasive wear.

Further, the DLC and/or diamond material coating of the sliding member preferably has a surface roughness (arithmetic mean roughness) Ra of 0.02 µm or lower, more preferably 0.01 µm or lower, still more preferably 0.0005 µm or lower, in order to prevent the occurrence of abrasive wear in the opposing member due to the opposing material attack property of the coating material. In order to protect the opposing member from abrasive wear and to maintain the friction reducing effect, the DLC and/or diamond coating of the sliding member also preferably has a negative surface skewness Rsk of preferably -0.5 or lower. The surface roughness Ra and the surface skewness Rsk are herein defined as an arithmetic average of the absolute values of the roughness profile ordinates and a parameter of the roughness profile symmetry, respectively, in conformance with JIS B 0601.

On the other hand, the ionic liquid is used as the lubricant alone or in combination with an additive or additives including, but not limited to, a polar material. The polar material is a substance having a permanent dipole spontaneously due to the polarization between positive charge (atomic nucleus) and negative charge (electrons) in its molecule. Such a polarity allows easy adsorption of the ionic liquid onto the sliding members for reduction in friction.

It is also preferable that all or part of the cation component of the ionic liquid is a molecular cation and all or part of the anion component of the ionic liquid is a molecular anion.

It is further preferable that the ionic liquid contains or consists of a room-temperature molten salt that is molten at room (ambient) temperature and stable to show high polarity and specific heat without being vaporized even under high-temperature conditions. The cation and anion components of the room-temperature molten salt are not necessarily but are preferably molecular cation and anion.

As the molecular cation, there can be used imidazolium derivative cations (monosubstituted imidazolium derivative cations, disubstituted imidazolium derivative cations and trisubstituted imidazolium derivative cations), pyridinium derivative cations, pyrrolidinium derivative cations and ammonium derivative cations. These molecular cations can be used alone or in combination of two or more thereof.

Examples of the monosubstituted imidazolium derivative cations are those represented by the following general formula (1): 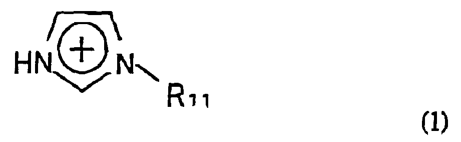 in which R11 represents a monovalent organic group, preferably a monovalent hydrocarbon group, more preferably an alkyl or arylalkyl group having 1 to 20 carbon atoms. Specific examples of R11 are methyl and butyl.

Examples of the disubstituted imidazolium derivative cations are those represented by the following general formula (2): 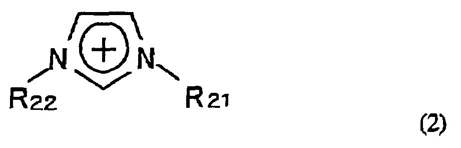 in which R21 and R22 may be the same or different and each represents a monovalent organic group, preferably a monovalent hydrocarbon group, more preferably an alkyl or arylalkyl group having 1 to 20 carbon atoms.
Specific examples of R21 and R22 are methyl and butyl. These groups can be used in any combination. Ethyl, pentyl, hexyl, octyl, decyl, dodecyl, tetradecyl, hexadecyl, octadecyl, benzil and γ-phenylpropyl are also usable as R21 and R22.
For instance, the following combinations are possible: (a) R21 is methyl and R22 is methyl, ethyl, butyl, pentyl, hexyl, octyl, decyl, dodecyl, tetradecyl, hexadecyl, octadecyl, benzil or y-phenylpropyl; and (b) R21 is ethyl and R22 = butyl.

Examples of the trisubstituted imidazolium derivative cations are those represented by the following general formula (3): 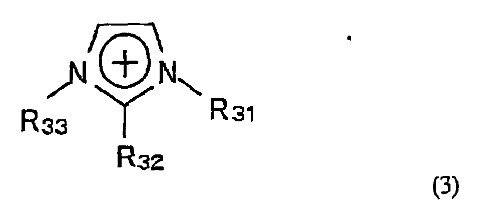 in which R31, R32 and R33 may be the same or different and each represents a monovalent organic group, preferably a monovalent hydrocarbon group, more preferably an alkyl or arylalkyl group having 1 to 20 carbon atoms.
Specific examples of R31, R32 and R33 are methyl and butyl. These groups can be used in any combination. Ethyl, propyl, hexyl and hexadecyl are also usable as R31, R32 and R33. For instance, the following combination is possible: R31 is ethyl, propyl, butyl, hexyl or hexadecyl and R32 and R33 are methyl.

Examples of the pyridinium derivative cations are those represented by the following general formula (4): 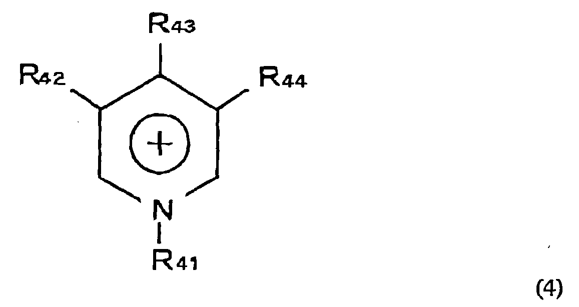 in which R41, R42, R43 and R44 may be the same or different and each represents either a hydrogen atom or a monovalent organic group, preferably a monovalent hydrocarbon group, more preferably an alkyl or arylalkyl group having 1 to 20 carbon atoms.
Specific examples of R41, R42, R43 and R44 are methyl and butyl. These groups can be used in any combination. Hydrogen, ethyl, hexyl and octyl are also usable as R41, R42, R43 and R44. For instance, the following combinations are possible: (a) R41 is ethyl or buthyl and R42, R43 and R44 are hydrogen; (b) R41 is butyl, R42 and R43 are hydrogen and R44 is methyl; (c) R41 is butyl, R42 and R44 are hydrogen and R43 is methyl; (d) R41 is butyl, R42 and R43 are methyl and R44 is hydrogen; (e) R41 is butyl, R42 and R44 are methyl and R43 is hydrogen; (f) R41, is butyl, R42 and R43 are hydrogen and R44 is ethyl; (g) R41 is hexyl and R42, R43 and R44 are hydrogen; (h) R41 is hexyl, R42 and R43 are hydrogen and R44 is methyl; (i) R41 is hexyl, R42 and R44 are hydrogen and R43 is methyl; (j) R41 is octyl and R42, R43 and R44 are hydrogen; (k) R41 is octyl, R42 and R43 are hydrogen and R44 is methyl; and (1) R41 is octyl, R42 and R44 are hydrogen and R43 is methyl.

Examples of the pyrrolidinium derivative cations are those represented by the following general formula (5): 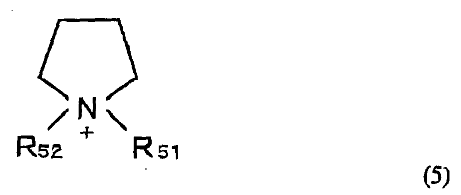 in which R51 and R52 may be the same or different and each represents a monovalent organic group, preferably a monovalent hydrocarbon group, more preferably an alkyl or arylalkyl group having I to 20 carbon atoms.
Specific examples of R51 and R52 are methyl and butyl. These groups can be used in any combination. Ethyl, propyl, hexyl and octyl are also usable as R51 and R52. For instance, the following combinations are possible: (a) R51 is methyl and R52 is methyl, ethyl, butyl, hexyl or octyl; (b) R51 is ethyl and R52 is butyl; and (c) R51 and R52 are propyl, buthyl or hexyl.

Examples of the ammonium derivative cations are those represented by the following general formula (6): 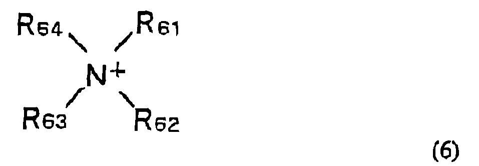 in which R61, R62, R63 and R64 may be the same or different and each represents a monovalent organic group, preferably a monovalent hydrocarbon group, more preferably an alkyl or arylalkyl group having 1 to 20 carbon atoms.
Specific examples of R61, R62, R63 and R64 are methyl and butyl. These groups can be used in any combination. Ethyl and octyl are also usable as R61, R62, R63 and R64. For instance, the following combinations are possible: (a) R61, R62, R63 and R64 are methyl, ethyl or butyl; and (b) R61 is methyl and R62, R63 and R64 are octyl.

Phosphonium derivative cations of the following general formula (7) are also suitable as the molecular cation: 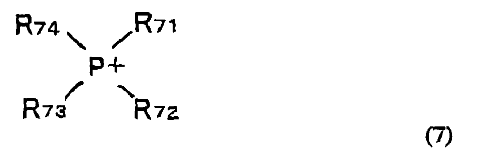 in which R71, R72, R73 and R74 may be the same or different and each represents a monovalent organic group, preferably a monovalent hydrocarbon group, more preferably an alkyl or arylalkyl group having 1 to 20 carbon atoms.
Specific examples of R71, R72, R73 and R74 are methyl and butyl. These groups can be used in any combination. Ethyl, isobutyl, hexyl, octyl, tetradecyl, hexadecyl, phenyl and benzil are also usable as R71, R72, R73 and R74. For instance, the following combinations are possible: (a) R71 is methyl and R72, R73 and R74 are butyl or isobutyl; (b) R71 is ethyl and R72, R73 and R74 are butyl; (c) R71, R72, R73 and R74 are butyl or octyl; (d) R71 is tetradecyl and R72, R73 and R74 are butyl or hexyl; (e) R71 is hexadecyl and R72, R73 and R74 are butyl; and (f) R71 is benzil and R72, R73 and R74 are phenyl.

Guanidinium derivative cations of the following general formula (8) are suitable as the molecular cation: 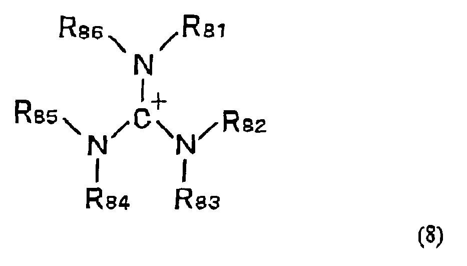 in which R81, R82, R83, R84, R85 and R86 may be the same or different and each represents either a hydrogen atom or a monovalent organic group, preferably a monovalent hydrocarbon group, more preferably an alkyl or arylalkyl group having 1 to 20 carbon atoms.
Specific examples of R81, R82, R83, R84, R85 and R86 are methyl and butyl. These groups can be used in any combination. Hydrogen, ethyl, propyl and isopropyl are also usable as R81, R82, R83, R84, R85 and R86. For instance, the following combinations are possible: (a) R81, R82, R83, R84, R85 and R86 are hydrogen or methyl; (b) R81 is ethyl, R82, R83, R84 and R85 are methyl and R86 is hydrogen; (c) R81 is isopropyl, R82, R83, R84 and R85 are methyl and R86 is hydrogen; and (d) R81 is propyl and R82, R83, R84, R85 and R86 are methyl.

Further, isouronium derivative cations of the following general formula (9) are suitable as the molecular cation: 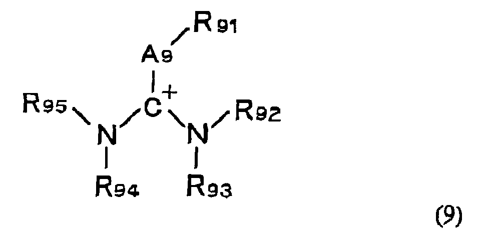 in which R91, R92, R93, R94 and R95 may be the same or different; each represents either a hydrogen atom or a monovalent organic group, preferably a monovalent hydrocarbon group, more preferably an alkyl or arylalkyl group having 1 to 20 carbon atoms; and A9 represents an oxygen atom or a sulfur atom.
Specific examples of R91, R92, R93, R94 and R95 are methyl and butyl. These groups can be used in any combination. Hydrogen and ethyl are also usable as R91, R92, R93, R94 and R95. For instance, the following combinations are possible: (a) A9 is oxygen and R91, R92, R93, R94 and R95 are methyl; (b) A9 is oxygen, R91 is ethyl and R92, R93, R94 and R95 are methyl; and (c) A9 is sulfur, R91 is ethyl and R92, R93, R94 and R95 are methyl.

As the molecular anion, there can be used a sulfate anion (SO₄²⁻), a hydrogen sulfate anion (HSO₄⁻) and other substituted sulfate anions represented by the following general formula (10): 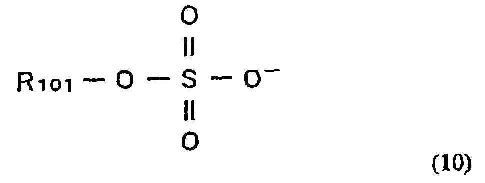 in which R101 is a monovalent organic group, preferably a monovalent hydrocarbon group, more preferably an alkyl or arylalkyl group having 1 to 20 carbon atoms. Specific examples of R101 are methyl, ethyl, butyl, hexyl and octyl.

As the molecular anion, there can also be used sulfonate anions represented by the following general formula (11): 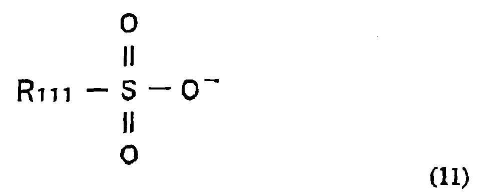 in which R111 is a monovalent organic group, preferably a monovalent hydrocarbon group, more preferably an alkyl or arylalkyl group having 1 to 20 carbon atoms, which may be substituted with fluorine. Specific examples of R111 are fluoromethyl such as trifluoromethyl and *p*-tolyl.
For instance, the sulfonate anion of the formula (11) is a trifluoromethane sulfonate ion in the case of R111 being trifluoromethyl. In the case of R111 being p-tolyl, the sulfonate anion of the formula (11) is a p-toluene sulfonate ion.

There can be further used, as the molecular anion, amide or imide anions, methane anions, boron compound anions, phosphorus compound anions, carboxylate anions and metal-containing anions.

Examples of the amide or imide anions are those represented by the following formulas (12) to (14):

(CN)₂N⁻ (12)

[N(CF₃)₂]⁻ (13)

[N(SO₂CF₃)₂]⁻ (14).

The amide or imide anions are not necessarily limited to the above examples.

Examples of the methane anions are those represented by the following formulas (15) and (16):

[HC(SO₂CF₃)₂]⁻ (15)

C(SO₂CF₃)₃⁻ (16).

The methane anions are not necessarily limited to the above examples.

Examples of the boron compound anions those represented by the following formulas (17) to (23):

BF₄⁻ (17)

B(CN)₄⁻ (18)

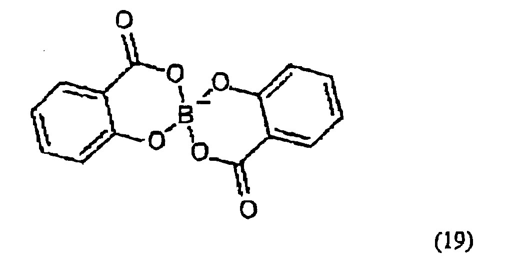

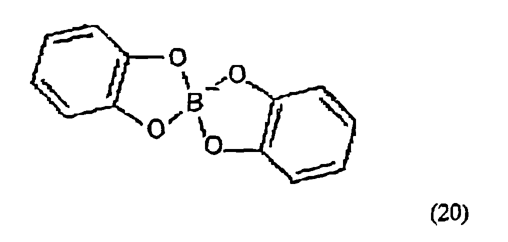

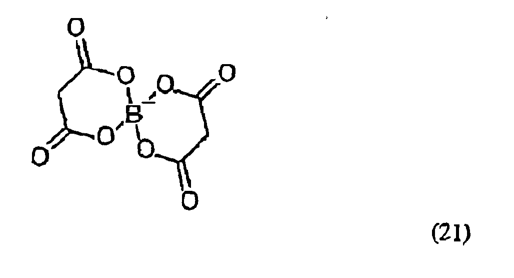

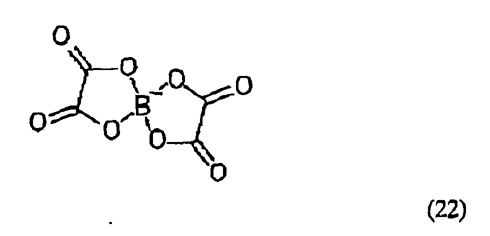

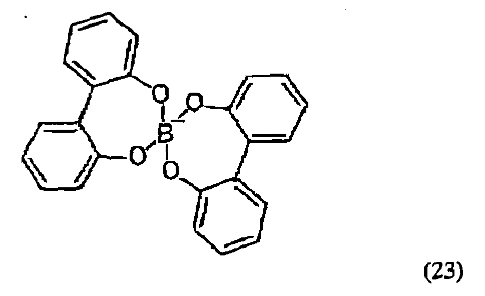

The boron compound anions are not necessarily limited to the above examples.

Examples of the phosphorus compound anions are those represented by the following formulas (24) to (32):

PF₆⁻ (24)

(C₂F₅)₃PF₃⁻ (25)

(C₃F₇)₃PF₃⁻ (26)

(C₄F₉)₃PF₃⁻ (27)

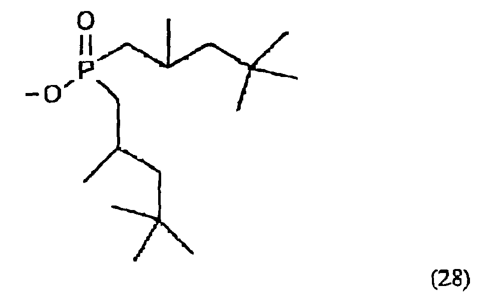

(C₂F₅)₂P(O)O⁻ (29)

PO₄³⁻ (30)

HPO₄²⁻ (31)

(C₂F₅)₂PO₄⁻ (32).

The phosphorus compound anions are not necessarily limited to the above examples.

Examples of the carboxylate anions are those represented by the following formulas (33) and (34):

C₁₀H₂₁COO⁻ (33)

CF₃COO⁻ (34).

The carboxylate anions are not necessarily limited to the above examples.

Examples of the metal-containing anions are those represented by the following formulas (35) and (36):

SbF6⁻ (35)

Co(CO)4⁻ (36).

The metal-containing anions are not necessarily limited to the above examples.

Halogenide anions such as fluorine ion (F⁻), chlorine ion (CI⁻), bromine ion (Br-) and iodine ion (I-) are also usable as the anion component although these are not molecular anions.

Among the above, the ionic liquid is preferably a mixture of at least one molecular cation (as cation component) selected from the group consisting of imidazolium derivative cations, pyridinium derivative cations, pyrrolidinium derivative cations and ammonium derivative cations and at least one molecular anion (as anion component) selected from the group consisting of boron tetrafluoride anion, trifluoromethane sulfate anion, hydrogen fluoride anion [(HFn)F'] (n is a real number of preferably 1 to 3), hydrogen sulfate anion and dihydrogen phophate anion,

The above-structured sliding mechanism can be applied to various mechanical apparatuses such as an automotive internal combustion engine and an automotive transmission. More specifically, the sliding members of the sliding mechanism may be in the form of a piston, a piston pin, a connecting rod, a cam, a camshaft a crankshaft etc. of the internal combustion engine or in the form of side gear and differential gear parts (for sliding contact via a washer) or gear teeth of the transmission. The sliding mechanism can also be applied to industrial machines such as a gear wheel unit.

The present invention will be described in more detail by reference to the following examples. It should be however noted that the following examples are only illustrative and not intended to limit the invention thereto.

### Preparation of Ionic Liquids

Two kinds of ionic liquids A and B were prepared as lubricants. The ionic liquid A consisted of an ammonium derivative cation represented by the general formula (6) and an imide anion represented by the general formula (14). On the other hand, the ionic liquid B consisted of an ammonium derivative cation represented by the general formula (6) and a boron compound anion represented by the general formula (17). The properties of the ionic liquids A and B are indicated in TABLE 1.

**TABLE 1**

| | Kinematic viscosity at 40°C | Viscosity index | Pour point |
|---|---|---|---|
| Ionic liquid A | 20.4 mm²/s | 168 | -50°C |
| Ionic liquid B | 85.3 mm²/s | 125 | -7.5°C |

### Preparation of Sliding Members

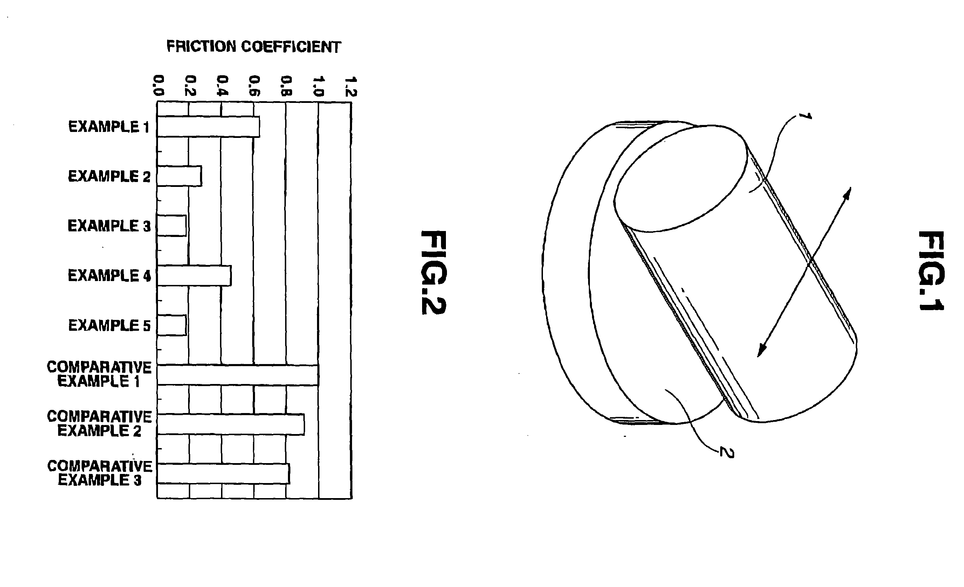

Cylindrical pins 1 and disks 2 were prepared as follows for use in a reciprocating friction test unit as shown in FIG 1.

The pins 1 were cut from high-carbon chromium bearing steel SUJ 2 in conformance with JIS G 4805, machined to the following dimensions and finished to a surface roughness Ra of 0.04 µm. In Example 3, a DLC coating was formed on the pin 1 by PVD arc ion plating process. No coatings were applied to the pins 1 in Examples 1, 2, 4 and 5 and Comparative Examples 1 to 3.

The disks 2 were formed by using as base material high-carbon chromium bearing steel SUJ 2 in conformance with JIS G 4805 in Examples 1 to 3 and Comparative Examples 1 to 3 and carburized tempered chromium molybdenum steel SCM 415 in conformance with JIS G 4105 in Examples 4 and 5. Each of the disks 2 was machined to the following dimensions and finished to a surface roughness Ra of 0.01 µm. In Examples 1 to 3, DLC coatings were formed on the disks 2 by PVD arc ion plating process. The PVD-DLC coatings had a hydrogen content of 0.5 atomic% or less, a Knoop hardness of 2170 kg/mm² a surface roughness Ra of 0.03 µm and a thickness of 0.5 µm. In Examples 4 and 5, diamond coatings were applied to the disks 2 by ECR sputtering using graphite target under the conditions of a microwave power of 400 W and a bias voltage of 300 V in an atmosphere of argon under a pressure of 2 × 20⁻¹ Pa. No coatings were applied to the disks 2 in Comparative Examples 1 and 2. In Comparative Example 3, a DLC coating was applied to the disk 2 by CVD process. The CVD-DLC coating had a hydrogen content of about 10 atomic%.

### Friction Test

In each of Examples 1 to 5 and Comparative Examples 1 to 3, the pin 1 and the disk 2 were set in the friction test unit as shown in FIG. 1 and subjected to friction test to measure a coefficient of friction between the pin 1 and the disk 2 under lubrication with the ionic liquid A or B. The friction test was performed under the following test conditions. The material combinations and the measurement results are indicated in TABLE 2 and FIG. 2, respectively.

**[Test Conditions]**

| | |
|---|---|
| Test machine: | Pin-on-disk reciprocating friction test unit |
| Sliding member: | Cylindrical pin of 15 mm diameter and 22 mm length |
| Opposing member: | Disc of 24 mm diameter and 7.9 mm thickness |
| Load: | 400 N (applied to the sliding member) |
| Amplitude: | 3.0 mm |
| Frequency: | 50 Hz |
| Test temperature: | 80°C |
| Test time: | 30 minutes |

**TABLE 2**

| | Lubricant | Disk surface | Cylinder surface |
|---|---|---|---|
| Example 1 | Ionic liquid A | DLC (PVD) | SUJ2 |
| Example 2 | Ionic liquid B | DLC (PVD) | SUJ2 |
| Example 3 | Ionic liquid B | DLC (PVD) | DLC (PVD) |
| Example 4 | Ionic liquid A | Diamond | SUJ2 |
| Example 5 | Ionic liquid B | Diamond | SUJ2 |
| Comparative Example 1 | Ionic liquid A | SUJ2 | SUJ2 |
| Comparative Example 2 | Ionic liquid B | SUJ2 | SUJ2 |
| Comparative Example 3 | Ionic liquid B | DLC(CVD) | SUJ2 |

As is apparent from FIG 2, the combined use of the DLC- or diamond-coated sliding member and the ionic liquid in each of Examples 1 to 5 led to a much lower friction coefficient than those in Comparative Examples 1 to 3.

As described above, it is possible according to the present invention to obtain a significant friction reducing effect by the combined use of the DLC and/or diamond material and the ionic liquid.

The entire contents of Japanese Patent Application No. 2006-255364 (filed on September 21, 2006) are herein incorporated by reference.

Although the present invention has been described with reference to the above-specific embodiment of the invention, the invention is not limited to this exemplary embodiment. Various modification and variation of the embodiment described above will occur to those skilled in the art in light of the above teachings. The scope of the invention is defined with reference to the following claims.

## Claims

1. A low-friction sliding mechanism, comprising:
a pair of sliding members having respective sliding surfaces slidable relative to each other, at least one of the sliding surfaces having a coating of either a diamond-like carbon material, a diamond material or a combination thereof; and
an ionic liquid applied to the sliding surfaces, the ionic liquid consisting of cation and anion components and existing in liquid or gel form at room temperature.

2. The low-friction sliding mechanism according to claim 1, wherein the cation component of the ionic liquid is at least one molecular cation selected from the group consisting of imidazolium derivative cations, pyridinium derivative cations, pyrrolidinium derivative cations and ammonium derivative cations and the anion component of the ionic liquid is at least one molecular anion selected from the group consisting of boron tetrafluoride anion, trifluoromethane sulfate anion, hydrogen fluoride anion, hydrogen sulfate anion and dihydrogen phophate ion.

3. The low-friction sliding mechanism according to claim 1 or 2, wherein a polar material is added to the ionic liquid.

4. The low-friction sliding mechanism according to any one of claims 1 to 3, wherein the diamond-like carbon material and the diamond material have a sp3/sp2 carbon ratio of 2 or greater.

5. The low-friction sliding mechanism according to any one of claims 1 to 4, wherein the diamond-like carbon material has a hydrogen content of 3 atomic % or lower.

6. The low-friction sliding mechanism according to any one of claims 1 to 5, wherein the diamond material has a nanocrystalline structure with a crystal grain size of 20 nm or smaller.

7. The low-friction sliding mechanism according to any one of claims 1 to 6, wherein the coating has an arithmetic mean surface roughness Ra of 0.02 µm or lower.

8. The low-friction sliding mechanism according to any one of claims 1 to 7, wherein the coating has a negative surface skewness Rsk.

9. An automotive internal combustion engine utilizing the low-friction sliding mechanism according to any one of claims 1 to 8.

10. An automotive transmission utilizing the low-friction sliding mechanism according to any one of claims 1 to 8.
